# EUROPEAN PATENT APPLICATION

(11) **EP 4 617 096 A1**
(43) Date of publication of application: **17.09.2025**
(21) Application number: 22965170.8
(22) Date of filing: 10.11.2022
(51) Int. Cl.: B60K 35/00

(54) **DISPLAY DEVICE**

(71) Applicant: Mitsubishi Jidosha Kogyo Kabushiki Kaisha, Tokyo 108-8410 (JP)
(72) Inventor: TOMIDA Yuichi, Tokyo 108-8410 (JP); NAKAGAWA Kazuki, Tokyo 108-8410 (JP); LIN Shu-An, Tokyo 108-8410 (JP); ISHIKAWA Kei, Tokyo 108-8410 (JP); NAKATA Yuri, Tokyo 108-8410 (JP); UEDA Reoto, Tokyo 108-8410 (JP)
(74) Representative: Vossius & Partner Patentanwälte Rechtsanwälte mbB
(86) International application number: PCT/JP2022/041937
(87) International publication number: WO 2024/100845

(57) **Abstract**

The disclosed display device includes a first displaying mode (4) that includes the first displaying mode comprising a first contents displaying segment (10) displaying information indicating a running state of a vehicle or an operation state of an on-board device; a first output displaying segment (11) arranged in a range including a portion above the first contents displaying segment (10) and indicating a first output of the vehicle with a length of a bar graph drawn therein; and a second output displaying segment (12) arranged in a range including at least portions on left and right sides of the first contents displaying segment (10) and the first output displaying segment (11) and a portion above the first contents displaying segment (10) and the first output displaying segment (11) at an outer circumference of the first contents displaying segment (10) and the first output displaying segment (11) and indicating a second output of the vehicle with a length of a bar graph drawn therein.

## Description

### [Technical Field]

The present embodiment relates to a display device that is mounted on a vehicle and that displays vehicle speed information, output information and the like.

### [Background Art]

One of conventionally-known display devices for displaying vehicle speed information and output information (e.g., engine output related information, motor output related information) of a vehicle displays an image modeling an existing analog meter. Known examples of such an image are an image of the front view of an analog meter and an image of the perspective diagram of an analog meter, which is obliquely viewed from a place displaced from the front. Further, a technique has been proposed which switches the display modes (layout in the image) like these (see Patent Document 1).

### [Citation List] [Patent Literature]

[PLT 1] JP 2016-002808 A

### [Summary of Invention]

### [Technical Problem]

An image modeling an existing analog meter is suitable for conveying vehicle speed information and output information in an easy-to-understand manner without depending on the language used by the owner (user of the display device). On the other hand, there is a problem in that the information density (the information amount per unit area of a screen displaying the image) is relatively low, which makes it inconvenient to reduce the size of the display device. One of the solutions to this problem may increase the information density by reducing the size of the image modeling an analog meter itself. However, this degrades the visibility and intelligibility of the information included in the image, which has a possibility that the correct information is not conveyed.

With the foregoing problem in view, one of the objects of the present disclosure is to provide a display device that can enhance the information density without impairing the intelligibility of the information. In addition to this object, actions and effects which are derived from each configuration of "Description of Embodiments" to be described below and which conventional technique does not attain are regarded as other objects of the present disclosure.

### [Solution to Problem]

The disclosed display device can be achieved in the embodiment and the application to be disclosed below and solves at least some of the above problems.

The disclosed display device includes a first displaying mode, which includes a first contents displaying segment displaying information indicating a running state of a vehicle or an operation state of an on-board device; a first output displaying segment arranged in a range including a portion above the first contents displaying segment and indicating a first output of the vehicle with a length of a bar graph drawn therein; and a second output displaying segment arranged in a range including at least portions on left and right sides of the first contents displaying segment and the first output displaying segment and a portion above the first contents displaying segment and the first output displaying segment at an outer circumference of the first contents displaying segment and the first output displaying segment and indicating a second output of the vehicle with a length of a bar graph drawn therein.

### [Advantageous Effects of Invention]

The disclosed display device can efficiently display a wide variety of information in an easy-to-understand and compact manner, and the information density can be enhanced without impairing the intelligibility of the information.

### [Brief Description of Drawings]

FIG. 1 is a block diagram showing the configuration of a display device according to an embodiment.
FIG. 2 is a diagram showing a screen configuration of a first displaying mode.
FIG. 3 is a diagram showing a screen configuration of a second displaying mode.
FIG. 4 is diagrams showing specific examples of the first displaying mode, FIG. 4Abeing a specific example for an ICEV (Intemal Combustion Engine Vehicle, engine vehicle), FIG. 4B being a specific example for a HEV (Hybrid Electric Vehicle, hybrid vehicle).
FIG. 5 is diagrams showing specific examples of the second displaying mode, FIG. 5A being a specific example for an ICEV, FIG. 5B being a specific example for a HEV.
FIG. 6 is diagrams showing specific examples of a first output displaying segment and a first remaining capacity displaying segment, FIG. 6A being a specific example for an ICEV, FIG. 6B being a specific example for a HEV.
FIG. 7 is diagrams showing specific examples of a third output displaying segment and a second remaining capacity displaying segment, FIG. 7A being a specific example for an ICEV, FIG. 7B being a specific example for a HEV.
FIG. 8 is a diagram showing a specific example of a second output displaying segment.
FIG. 9A is a diagram showing a specific example of a first numerical vehicle speed displaying segment, and FIG. 9B is a diagram showing a specific example of a second numerical vehicle speed displaying segment,
FIG. 10A is a diagram showing a screen configuration of the first contents displaying segment, and FIGs. 10B to 10E are diagrams showing specific examples thereof.
FIG. 11A is diagram showing a screen configuration of the second contents displaying segment, and FIGs. 11B to 11E are diagrams showing specific examples thereof.
FIG. 12 is a diagram showing an example of a minimum configuration of a displaying screen of the first displaying mode.
FIG. 13 is a diagram showing an example of a minimum configuration of a displaying screen of the second displaying mode.
FIG. 14 is a diagram showing an example of a modification of the first displaying mode (for an ICEV).

### [Description of Embodiments]

### [Examples]

### 1. Configuration

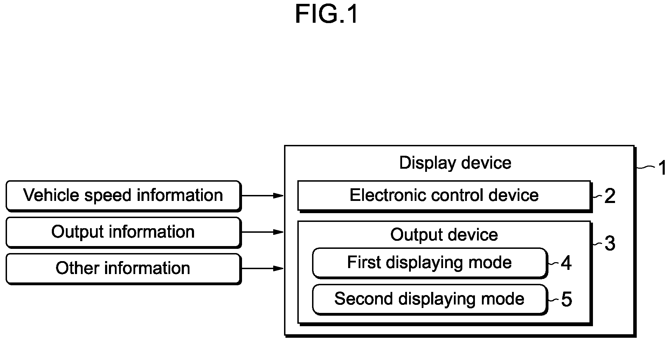

FIG. 1 is a block diagram illustrating a configuration of a display device 1 according to an embodiment. The display device 1 is mounted on a vehicle and displays vehicle speed information and output information. The vehicle speed information is information indicating a running speed of the vehicle. This vehicle speed information is generated by various ECUs (Electronic Control Units) such as a vehicle ECU and a power-train ECU. Altematively, the vehicle speed information can be generated in the display device 1 on the basis of a vehicle speed signal transmitted from a vehicle speed sensor.

The output information refers to information about the output (power) of the driving source of the vehicle. Specific examples of the output information include the rotation speed of the engine, the torque of the engine, the horsepower (power) of the engine, the rotation speed of the driving motor (vehicle-driving motor, running motor), the torque of the driving motor, the horsepower (power) of the driving motor, the consumed power of the driving motor, and the supplying power of the driving battery. The output information is generated by various ECUs, for example, and is transmitted to the display device 1. The vehicle speed information may be considered to be included in the broad sense of the output information.

In addition, the display device 1 is capable of displaying other information indicating the running state of the vehicle and the operating state of the on-board devices. Specific examples of the information indicating the running state of the vehicle include information such as a shift position, a speed reduction ratio of the transmission, a name of the running mode, a cruising distance, an estimated cruisable distance, a fuel consumption, an electric power consumption, a battery remaining capacity, a yaw rate, a roll rate, a pitch rate, a longitudinal acceleration, a lateral acceleration, a road surface slope angle, a tire pressure, an energy flow of the power train, a running direction (azimuth), an altitude, an air temperature, and a road surface friction coefficient.

Further, the information indicating the operating state of the on-board devices includes, for example, audio information, car navigation information, lighting state information, cruise control related information, inter-vehicle distance information, and various websites. These pieces of information are generated or acquired by, for example, various ECUs, on-board devices, and various sensors, and transmitted to the display device 1. Hereinafter, the other information representing the running state of the vehicle and the operating state of the on-board devices is also called contents information.

As shown in FIG. 1, the display device 1 includes an electronic control device 2 and an output device 3. The electronic control device 2 is a computer for controlling the content displayed on the output device 3, and includes a processor (arithmetic processor) and a memory (storage device). The process content (program) of the electronic control device 2 is stored in the memory, and is executed by the processor appropriately reading the content. The electronic control device 2 may be formed integrally with the output device 3 (built in the output device 3), or may be provided separately from the output device 3.

The output device 3 is a device for displaying information related to the vehicle, and is exemplified by an LCD (Liquid Crystal Display), an organic EL (Electro-Luminescence) display or a projector. All the information displayed on the output device 3 is controlled by the electronic control device 2. The shape of an information displaying area in the output device 3 is not particularly limited, but is, for example, a rectangular shape. The output device 3 is arranged at a position easily seen from the driver, such as in front of the driver (in front of the steering wheel) or in front of the center of vehicle cabin (in front of the midpoint between the driver's seat and the passenger's seat). As an accompanying device of the output device 3, a touch panel device that detects a touch operation on the screen, an input device provided with a keyboard, a physical button, or a touch pad, an eye tracking device that detects a line of sight, a gesture recognizing device that detects a gesture operation, and the like may be provided.

### 2. Details of Displaying Modes

At displaying modes of the information displayed on the output device 3, two types of displaying modes different in at least layout are prepared. One of the modes is called a first displaying mode 4 and the other is called a second displaying mode 5. These modes can be arbitrarily selected by the user.

The first displaying mode 4 is a mode that provides the appearance of a typical meter display, and is a mode in which the vehicle speed information, the output information, and the contents information are displayed. The second displaying mode 5 is a mode in which the display of the contents information is intensified. In the second displaying mode 5, the displaying area of the contents information is increased and the display area of the vehicle speed information is reduced as compared with the first displaying mode 4.

### 2-1. First Displaying Mode

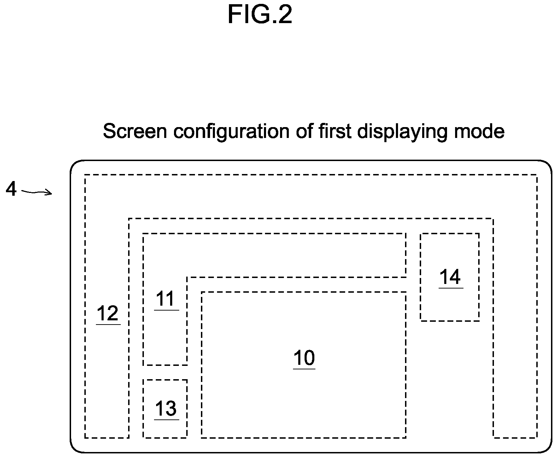

FIG. 2 is a diagram illustrating a screen configuration of the first displaying mode 4. The first displaying mode 4 includes at least a first contents displaying segment 10, a first output displaying segment 11, and a second output displaying segment 12. The first contents displaying segment 10 is a segment that displays information (contents information) indicating a running state of the vehicle or an operation state of an on-board device. The first contents displaying segment 10 can display, for example, letters, numbers, pictograms, images, videos (moving images), and the like.

The first output displaying segment 11 is a segment indicating an output (first output) of the vehicle with the length of a bar graph drawn therein. Hereinafter, the description of an "output" may be understood as the description of the "first output". In the first output displaying segment 11, a bar graph indicating at least the height of the output is displayed, and preferably the index of the length, such as a scale, a pointer (an indicator needle), a numerical value, and a unit, is displayed. The first output displaying segment 11 is arranged in a range including at least a portion above the first contents displaying segment 10. The first output displaying segment 11 shown in FIG. 2 is arranged on the left side and above the first contents displaying segment 10. The overall shape of the first output displaying segment 11 can be modeled to a shape (rotated L-shape) obtained by rotating the alphabet "L" clockwise by 90 degrees. Altematively, the overall shape may be modeled to a shape obtained by removing the lower side and the right side from the four sides constituting the outline of a square.

The second output displaying segment 12 is a segment indicating a vehicle speed serving as the second output of the vehicle with the length of a bar graph drawn therein. Hereinafter, the description of a "vehicle speed" may be understood as the description of the "second output". The second output includes another output (e.g., the first output) in addition to a vehicle speed. In the second output displaying segment 12, a bar graph indicating at least the height of the vehicle speed is displayed, and preferably the index of the length, such as a scale, a pointer (an indicator needle), a numerical value, and a unit, are displayed. The second output displaying segment 12 is arranged at an outer circumference of the first contents displaying segment 10 and the first output displaying segment 11. In addition, the second output displaying segment 12 is arranged in a range including at least portions on left and right sides of the first contents displaying segment 10 and the first output displaying segment 11. Further, the second output displaying segment 12 is arranged in a range including at least a portion above the first contents displaying segment 10 and the first output displaying segment 11. As shown in FIG. 2, the overall shape of the second output displaying segment 12 can be modeled to a shape (inverted U shape) obtained by vertically inverting the alphabet "U". Altematively, the overall shape may be modeled to a shape obtained by removing only the lower side from the four sides constituting a square.

The first displaying mode 4 shown in FIG. 2 includes a first remaining capacity displaying segment 13 and a first numerical vehicle speed displaying segment 14. The first remaining capacity displaying segment 13 is a segment that displays information indicating a remaining capacity of a battery mounted on the vehicle. The first remaining capacity displaying segment 13 is arranged on the left side of the first contents displaying segment 10 and below and contiguous to the first output displaying segment 11. In a HEV (Hybrid Electric Vehicle, hybrid vehicle) provided with a driving motor and an engine with a generator, the remaining capacity of a driving battery (high-voltage battery) is displayed in the first remaining capacity displaying segment 13. The magnitude of the remaining capacity may be expressed concretely by a numerical value or a percentage, or may be expressed abstractly by a color or a shape of an icon. Further, in an ICEV (Intemal Combustion Engine Vehicle, engine vehicle) not being provided with a driving battery, the remaining capacity of an auxiliary battery may be displayed in the first remaining capacity displaying segment 13, or the display of the first remaining capacity displaying segment 13 itself may be omitted.

The first numerical vehicle speed displaying segment 14 is a segment that displays a vehicle speed of the vehicle by number separately from the second output displaying segment 12. The units of a vehicle speed displayed here may be set in advance according to the destination of the vehicle, or may be arbitrarily set by the user. Specific examples of the unit of the vehicle speed include km/h (kilometers per hour), mph (miles per hour), and m/s (meters per second). Altematively, the user may arbitrarily select on/off of the display of the first numerical vehicle speed displaying segment 14.

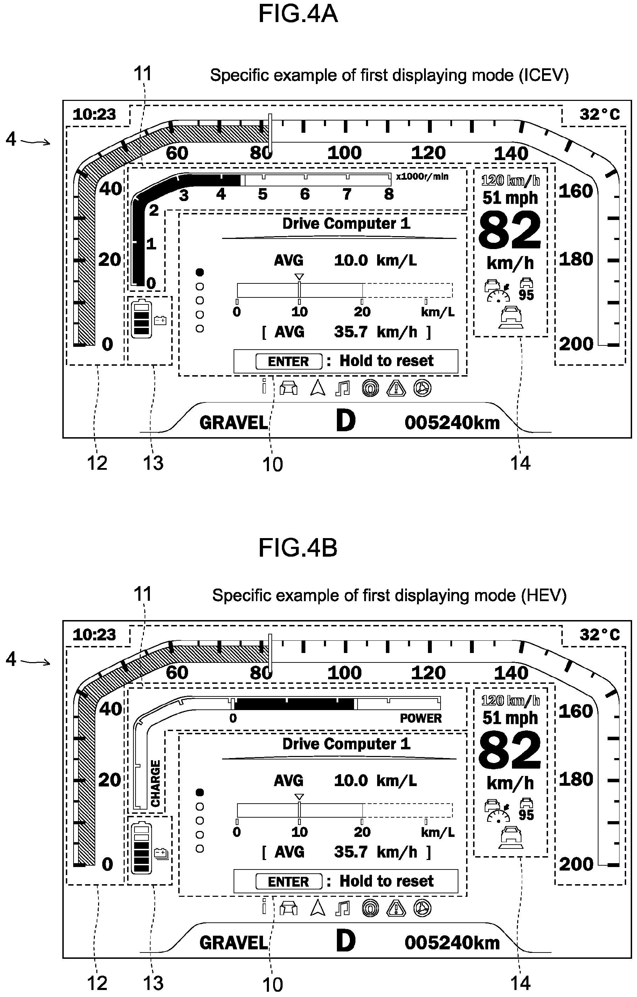

FIGs. 4A and 4B are diagrams showing a specific examples of the first displaying mode 4. FIG. 4A is an example of the display for an ICEV, and FIG. 4B is an example for a HEV provided with a motor that carries out power running and regeneration. Both examples include the first contents displaying segment 10, the first output displaying segment 11, the second output displaying segment 12, the first remaining capacity displaying segment 13, and the first numerical vehicle speed displaying segment 14. In addition, in a part except for the above, the time, the outside air temperature, a name of the running mode, a shift position, and a cruising distance and the like are displayed, and in addition, icons for selecting the type and the display setting of the information to be displayed on the first contents displaying segment 10 are displayed.

### 2-2. Second Displaying Mode

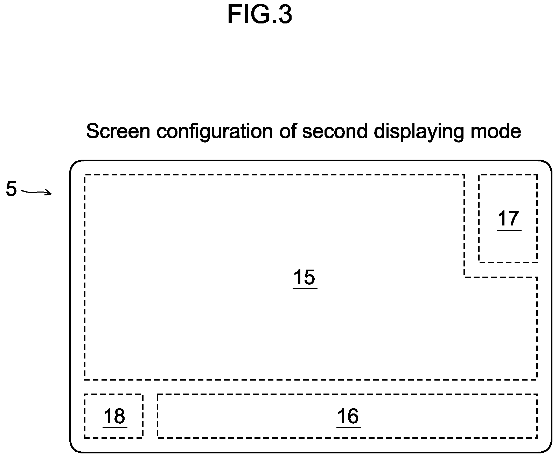

FIG. 3 is a diagram illustrating a screen configuration of the second displaying mode 5. The second displaying mode 5 includes at least a second contents displaying segment 15, a third output displaying segment 16, and a second numerical vehicle speed displaying segment 17. The second contents displaying segment 15 is a segment that displays the running state of the vehicle and the operating state of the on-board devices, and has a wider area than the first contents displaying segment 10. The second contents displaying segment 15 may display the same (or substantially the same) information as the information displayed on the first contents displaying segment 10, or may display a detailed image illustrating the details of the information.

Like the first output displaying segment 11, the third output displaying segment 16 is a segment that displays the output of the vehicle with the length of a bar graph drawn therein. In the third output displaying segment 16, a bar graph indicating at least the height of the output is displayed, and preferably the index of the length, such as a scale, a pointer (an indicator needle), a numerical value, and a unit, is displayed. The third output displaying segment 16 is arranged in a range including at least a portion below the second contents displaying segment 15. The third output displaying segment 16 shown in FIG. 3 is arranged substantially horizontally along the lower side of the second contents displaying segment 15.

Like the first numerical vehicle speed displaying segment 14, the second numerical vehicle speed displaying segment 17 is a segment that displays the vehicle speed by number. The units of a vehicle speed displayed here may be set in advance according to the destination of the vehicle, or may be arbitrarily set by the user. In the second displaying mode 5, the second numerical vehicle speed displaying segment 17 is displayed at all times, and the user cannot select on/off of the display of the second numerical vehicle speed displaying segment 17.

The second displaying mode 5 shown in FIG. 3 includes a second remaining capacity displaying segment 18. Like the first remaining capacity displaying segment 13, the second remaining capacity displaying segment 18 is a segment that displays information indicating a remaining capacity of the battery mounted on the vehicle. The second remaining capacity displaying segment 18 is arranged below the second contents displaying segment 15 and on the left side and contiguous to the third output displaying segment 16. In a HEV, the remaining capacity of the driving battery is displayed on the second remaining capacity displaying segment 18. In an ICEV, the remaining capacity of an auxiliary battery may be displayed in the second remaining capacity displaying segment 18, or the display of the second remaining capacity displaying segment 18 itself may be omitted.

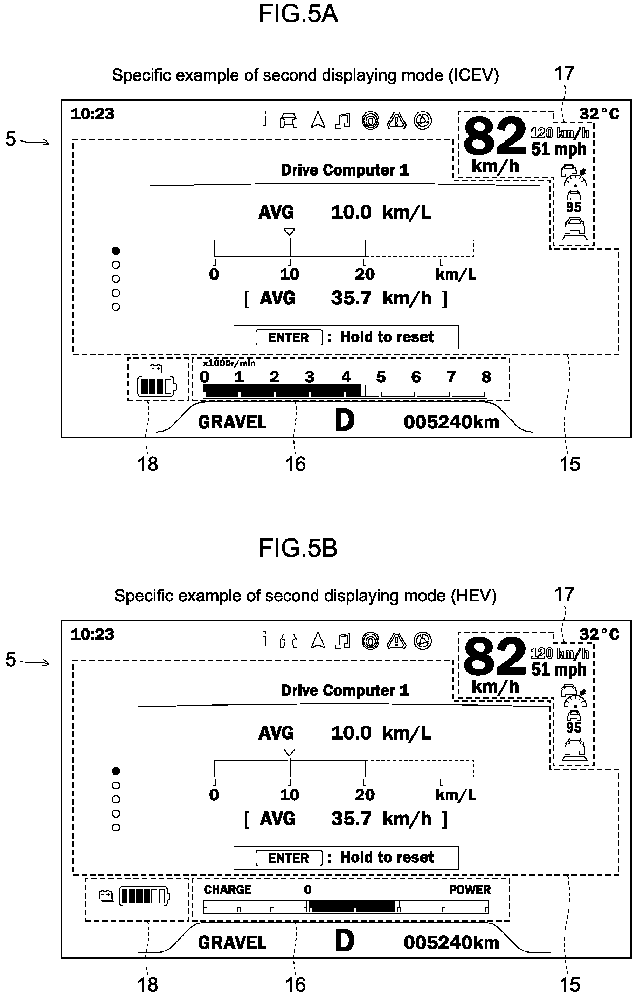

FIGs. 5A and 5B show the specific examples of the second displaying mode 5. FIG. 5A is an example of displaying for an ICEV, and FIG. 5B an example of displaying for a HEV. Either example of displaying includes the second contents displaying segment 15, the third output displaying segment 16, the second numerical vehicle speed displaying segment 17, and the second remaining capacity displaying segment 18. In addition, in a part except for the above, the time, the outside air temperature, a name of the running mode, a shift position, and a cruising distance and the like are displayed, and in addition, icons for selecting the type and the display setting of the information to be displayed on the second contents displaying segment 15 are displayed.

### 2-3. First Output Displaying Segment and First Remaining Capacity Displaying Segment

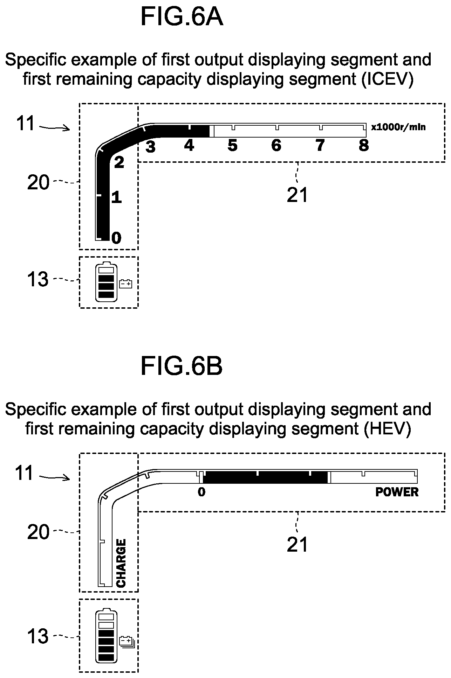

FIGs. 6A and 6B are diagrams showing specific examples of the first output displaying segment 11 and the first remaining capacity displaying segment 13. FIG. 6A is a display example for an ICEV, and FIG. 6B is a display example for a HEV.

The first output displaying segment 11 has a first-output left area 20 and an first-output upper area 21. The first-output left area 20 is an area extending in the up-down direction on the left side of the first contents displaying segment 10. The first-output upper area 21 is an area extending rightward from an upper end of the first-output left area 20 above the first contents displaying segment 10. The first-output left area 20 is an area representing a relatively lower output as compared with the first-output upper area 21.

In example of FIG. 6A, the position of the origin (a scale indicating that the output is zero) of the bar graph representing the height of the output is arranged near the lower end of the first-output left area 20. The bar graph extends upward from the origin along the extending direction of the first-output left area 20 as the output increases. If the output further increases after the bar graph reaches near the upper end of the first-output left area 20, the bar graph extends rightward along the extending direction of the first-output upper area 21.

In example of FIG. 6B, the first output displaying segment 11 including a power area and a charging area. In the example of FIG. 6B, the position of the origin of the bar graph serving as the boundary between the power area and the charging area is arranged in the vicinity of the middle portion between the left end and the center of the first-output upper area 21. The power area is an area indicating a consumption electric power of the motor and a charging area indicates charged energy of the driving battery.

When the value of the output is positive (during power running), the bar graph extends rightward from the origin along the extending direction of the first-output upper area 21 as the absolute value of the output increases. On the other hand, when the value of the output is negative (during regeneration), the output extends leftward from the origin along the extending direction of the first-output upper area 21 as the output decreases (the absolute value of the output becomes larger). If the output further decreases (the absolute value of the output increases) after the bar graph reaches in the vicinity of the left end of the first-output upper area 21, the bar graph extends downward along the extending direction of the first-output left area 20.

The first remaining capacity displaying segment 13 is arranged below and contiguous to the first-output left area 20 (charging area). The examples of displaying of FIGs. 6A and 6B display images of dry cell shapes containing bar graphs that expand in proportion to the respective remaining capacities. The origin of each bar graph is arranged near the lower end of the first remaining capacity displaying segment 13, and the bar graph further extends upward from the origin as the remaining capacity is larger.

In the example of FIG. 6A, the extending direction of the bar graph displayed in the first remaining capacity displaying segment 13 matches the extending direction of the bar graph displayed in the first-output left area 20. This makes it possible to intuitively understand the outputs of the auxiliary battery and the engine. In addition, in the example of displaying of FIG. 6B, the extending direction of the output at the time of regeneration (the direction in which the negative output value increases) displayed in the first output displaying segment 11 is opposite to the extending direction of the bar graph displayed in the first remaining capacity displaying segment 13. This makes it possible to intuitively understand that the regenerative power is charged in the driving battery.

### 2-4. Third Output Displaying Segment and Second Remaining Capacity Displaying Segment

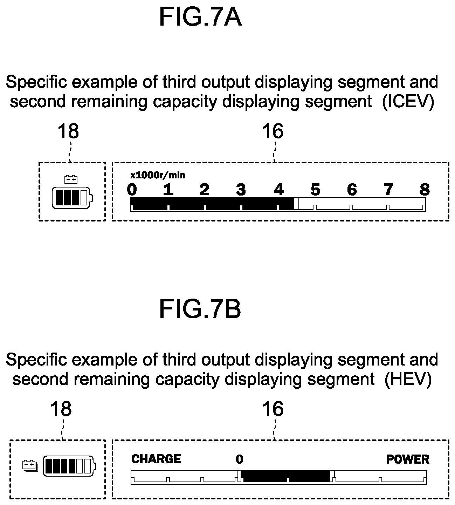

FIGs. 7A and 7B are diagrams showing specific examples of the third output displaying segment 16 and the second remaining capacity displaying segment 18. FIG. 7A is an example of displaying for an ICEV, and FIG. 7B an example of displaying for a HEV.

In example of displaying of FIG. 7A, the position of the origin of the bar graph is located near the left end of the third output displaying segment 16. The bar graph extends rightward from the origin along the extending direction of the third output displaying segment 16 as the output increases.

In the example of displaying of FIG. 7B, the position of the origin of the bar graph is arranged in the vicinity of the middle portion between the left end and the center of the third output displaying segment 16. When the value of the output is positive (during power running), the bar graph extends rightward from the origin as the absolute value of the output increases. On the other hand, when the value of the output is negative (during regeneration), the output extends leftward from the origin as the output decreases (the absolute value of the output increases).

The second remaining capacity displaying segment 18 is positioned leftward and contiguous to the third output displaying segment 16. The examples of displaying of FIGs. 7A and 7B display images of dry cell shapes containing bar graphs that expand in proportion to the respective remaining capacities. The origin of each bar graph is arranged in the vicinity of the left end of the second remaining capacity displaying segment 18, and the bar graph further extends rightward from the origin as the remaining capacity is larger.

In the example of displaying of FIG. 7A, the extending direction of the bar graph displayed in the second remaining capacity displaying segment 18 matches the extending direction of the bar graph displayed in the third output displaying segment 16. This makes it possible to intuitively understand the outputs of the auxiliary battery and the engine. In addition, in the example of FIG. 7B, the extending direction of the output at the time of regeneration (the direction in which the negative output value increases) displayed in the third output displaying segment 16 is opposite to the extending direction of the bar graph displayed in the second remaining capacity displaying segment 18. This makes it possible to intuitively understand that the regenerative power is charged in the driving battery.

### 2-5. Second Output Displaying Segment

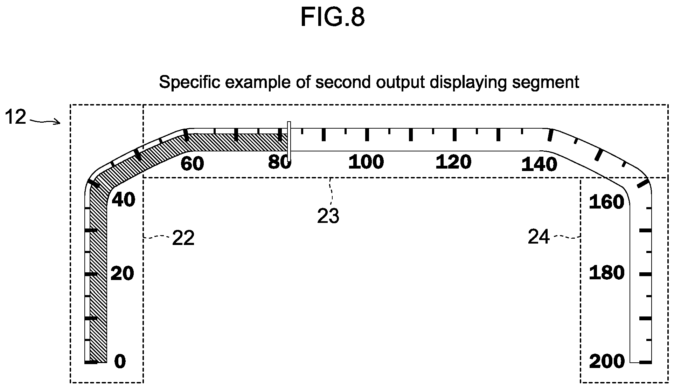

FIG. 8 is a diagram showing a specific example of the second output displaying segment 12. The second output displaying segment 12 includes a second-output left area 22, a second-output upper area 23, and a second-output right area 24. The second-output left area 22 is an area extending in the up-down direction on the left side of the first output displaying segment 11 (e.g., the first-output left area 20). The second-output upper area 23 is an area extending rightward from an upper end of the second-output left area 22 above the first output displaying segment 11 (e.g., the first-output upper area 21). The second-output right area 24 extends downward from the right end of the second-output upper area 23 on the right side of the first output displaying segment 11 and the first contents displaying segment 10. The second-output left area 22 is an area indicating a relatively lower vehicle speed as compared with the second-output upper area 23 and the second-output right area 24. The second-output left area 22 and the second-output right area 24 have lower ends at the same position in the height direction.

In the example of displaying of FIG. 8, the position of the origin (a scale indicating that the vehicle speed is zero) of the bar graph indicating the height of the vehicle speed is arranged in the vicinity of the lower end of the second-output left area 22. The bar graph extends upward from the origin along the extending direction of the second-output left area 22 as the vehicle speed increases. If the vehicle speed further increases after the bar graph reaches near the upper end of the second-output left area 22, the bar graph extends rightward along the extending direction of the second-output upper area 23. If the vehicle speed further increases after the bar graph reaches near the right end of second-output upper area 23, the bar graph extends downward along the extending direction of the second-output right area 24.

In the examples of displaying in FIGs. 6A and 8, the extending direction of the bar graph in the second output displaying segment 12 (the second-output left area 22) matches the extending direction of the bar graph in the first output displaying segment 11 (the first-output left area 20). This makes it possible to intuitively understand the vehicle speed and the state of the engine output. Similarly, the examples of displaying of FIGs. 6B and 8, the extending direction of the bar graph in the second output displaying segment 12 (the second-output upper area 23) matches the extending direction of the bar graph (during power running) in the first output displaying segment 11 (the first-output upper area 21). This makes it possible to intuitively understand the vehicle speed and the state of the motor output.

### 2-6. First Numerical Vehicle Speed Displaying Segment and Second Numerical Vehicle Speed Displaying Segment

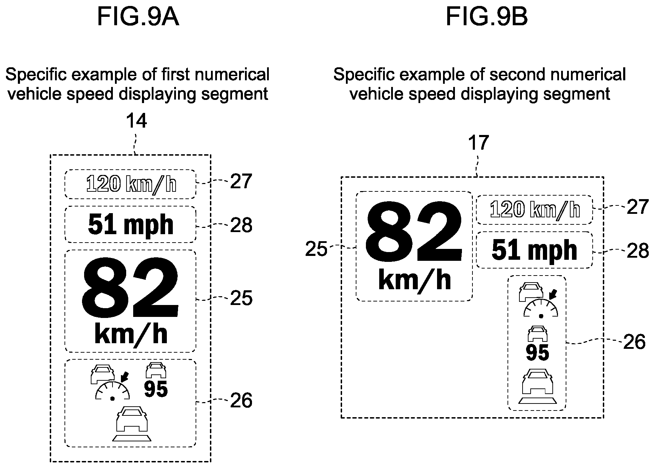

FIG. 9A is a diagram illustrating a specific example of the first numerical vehicle speed displaying segment 14, and FIG. 9B is a diagram illustrating a specific example of the second numerical vehicle speed displaying segment 17. The first numerical vehicle speed displaying segment 14 includes a numerical value displaying area 25 that displays a vehicle speed of the vehicle at least by number. In addition, the first numerical vehicle speed displaying segment 14 shown in FIG. 9A includes a cruise control displaying area 26, a legal displaying area 27, and a converted value displaying area 28. Each of the cruise control displaying area 26, a legal displaying area 27, and the converted value displaying area 28 may be set in advance according to the destination of the vehicle, or may be arbitrarily set by the user.

The cruise control displaying area 26 is an area that displays information related to cruise control. The cruise control is a control that automatically increases and decreases the vehicle speed irrespective of driving operation, and includes, for example, constant speed running control, automatic following control to a preceding vehicle, and inter-vehicle distance keeping control on an expressway. Specifically, a telltale (icon, mark) indicating that cruise control is being performed, a telltale indicating a set vehicle speed when the constant speed running control is being performed, and a telltale indicating that a preceding vehicle to be followed exists and also a predetermined inter-vehicle distance is secured are displayed.

The legal displaying area 27 is an area that displays information of the vehicle speed conforming to law and regulation. The legal displaying area 27 displays, for example, the legal speed limit and the designated speed designated for the road being run.

The converted value displaying area 28 is an area that displays a value obtained by converting the vehicle speed displayed in the second output displaying segment 12 or the numerical value displaying area 25 into another unit. For example, if the unit of the vehicle speed displayed on the second output displaying segment 12 or the numerical value displaying area 25 is "km/h" (kilometers per hour), the converted value displaying area 28 displays the value of a different unit (e.g., "mph" (miles per hour), or "m/s" (meters per second)). The unit to be converted into here may be arbitrarily selected by the user.

The second numerical vehicle speed displaying segment 17 shown in FIG. 9B includes the numerical value displaying area 25, the cruise control displaying area 26, the legal displaying area 27, and the converted value displaying area 28. The contents displayed in these areas are the same as those displayed in the first numerical vehicle speed displaying segment 14, and only the layout of the display is different. Accordingly, when the display mode is switched between the first displaying mode 4 and the second displaying mode 5, the display contents on the first numerical vehicle speed displaying segment 14 and the second numerical vehicle speed displaying segment 17 are not lost.

### 2-7. First Contents Displaying Segment

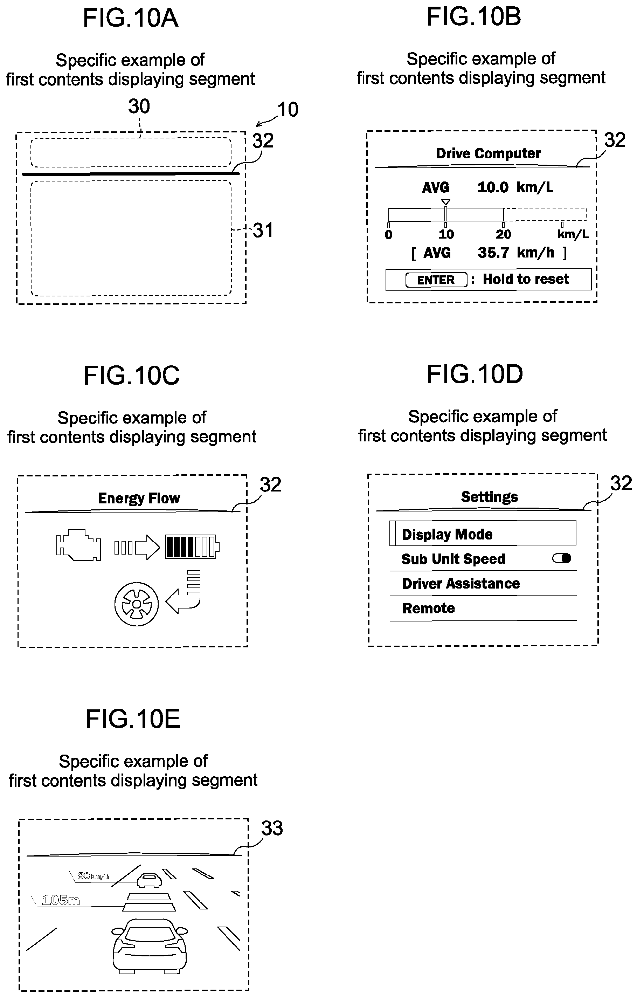

FIG. 10A is diagram showing a screen configuration of the first contents displaying segment 10, and FIGs. 10B to 10E are diagrams showing specific examples of the first contents displaying segment 10.

The first contents displaying segment 10 includes a first title displaying area 30 that displays a title of information, a first contents displaying area 31 that displays the contents of the information, and a first boundary line 32 that partitions these areas. The first boundary line 32 is a line horizontally extending to partition the first title displaying area 30 and the first contents displaying area 31 in an up-down direction. The display positions and the area sizes of the first title displaying area 30, the first contents displaying area 31, and the first boundary line 32 are unchanged regardless of the contents.

Specific examples of the title displayed in the first title displaying area 30 include "Drive Computer", "Energy Flow", and "Settings" as illustrated in FIGS. 10B to 10D. Examples of the contents associated with the title "Drive Computer" include information of an average fuel consumption and an average vehicle speed shown in FIG. 10B, and additionally include an instantaneous fuel consumption, the electric power consumption, a running time, and an estimated cruisable distance, for example.

The title "Energy Flow" is the title of a diagram representing the transfer state of energy between the engine with the generator and the drive battery and the driving wheels. In the example of displaying shown in FIG. 10C, each of the engine with a generator, the driving battery, and the driving wheels is represented by a simple icon, and the transferring state of energy (driving force or electric power) is represented by the arrows. Examples of the contents associated with the title "Settings" include an item for selecting a displaying mode and an item for selecting on/off of the first numerical vehicle speed displaying segment 14.

As shown in FIG. 10E, the first contents displaying segment 10 has a function for displaying a positional relationship between the vehicle and an ambient vehicle or an obstacle using a first perspective diagram that models the vehicle as looked down from an upper rear side. The first horizontal line 33, which is drawn between the ground and the sky in the first perspective diagram, is displayed in the same shape and in the same position as the first boundary line 32 appearing when the other information is displayed. This means that, even if the information displayed on the first contents displaying segment 10 is switched, the first boundary line 32 and the first horizontal line 33 are unchanged. The first boundary line 32 and the first horizontal line 33 do not have to be in the completely same shape. The title of the first perspective diagram may be, for example, "ADAS (Advanced Driver Assistance System information".

### 2-8. Second Contents Displaying Segment

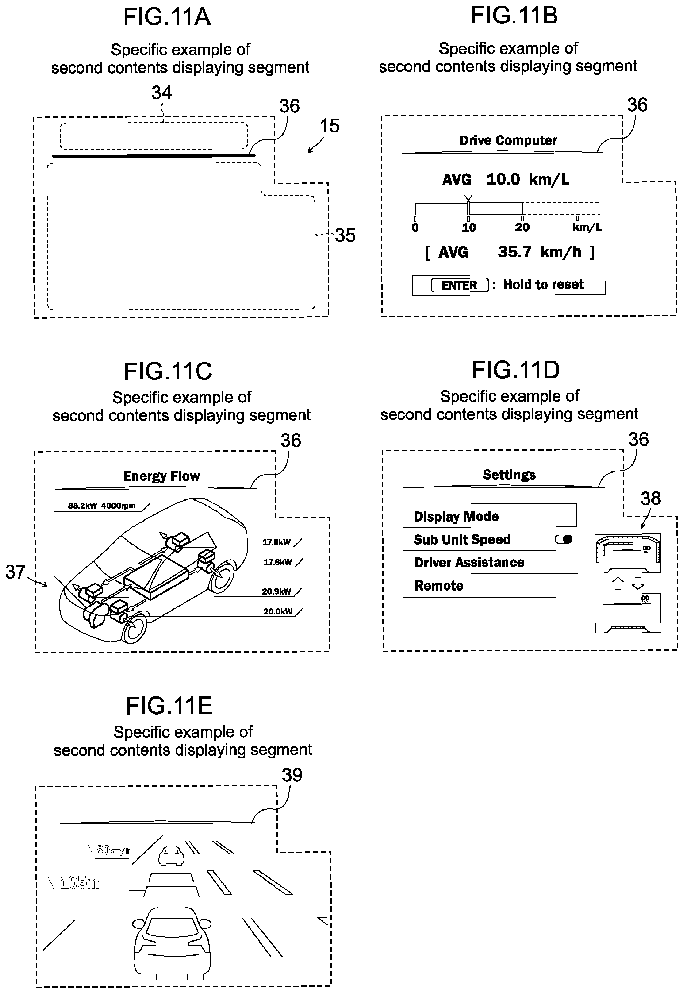

FIG. 11A is a diagram showing a screen configuration of the second contents displaying segment 15, and FIGs. 11B to 11E are diagrams showing specific examples of the second contents displaying segment 15.

The second contents displaying segment 15 has a wider area at least than the first contents displaying segment 10. The second contents displaying segment 15 illustrated in FIG. 11A has a shape expanded upwardly to a range where the first output displaying segment 11 and the second output displaying segment 12 are arranged in the first contents displaying segment 10.

The second contents displaying segment 15 includes a second title displaying area 34 that displays a title of information, a second contents displaying area 35 that displays the contents of the information, and a second boundary line 36 that partitions these areas. The second boundary line 36 is a line horizontally extending to partition the second title displaying area 34 and the second contents displaying area 35 in an up-down direction. The display positions and the area sizes of the second title displaying area 34, the second contents displaying area 35, and the second boundary line 36 are unchanged regardless of the contents.

Regarding the relationship between the first contents displaying segment 10 and the second contents displaying segment 15, the second title displaying area 34 is arranged above the first title displaying area 30 and the second boundary line 36 is at a higher position than the first boundary line 32. The second contents displaying area 35 is formed larger in size than the first contents displaying area 31, and is formed into a shape obtained by expanding the first contents displaying area 31 upward, leftward, and rightward, for example.

The second contents displaying segment 15 is capable of displaying at least the same information as the first contents displaying segment 10. Preferably, since having a wider range than the first contents displaying segment 10, the second contents displaying segment 15 displays letters and images larger than the first contents displaying segment 10 or display denser or more detailed information than the first contents displaying segment 10. For example, the example of displaying (contents associated with the title "Drive Computer") in FIG. 11B is an enlargement of the display content in FIG. 10B.

The example of displaying (contents associated with the title "Energy Flow") shown in FIG. 11C is a detailed image 37 detailing the contents of the information shown in FIG. 10C. In this detailed image, the positions of the engine with a generator, the driving battery, and the driving motor, and the driving wheels are shown in a perspective diagram, and the transferring state of energy (driving force or electric power) is represented by the arrows.

In the example of displaying (contents associated with the title "Settings") of FIG. 11D, a detailed image 3 that supplementarily explains the information described in the second contents displaying area 35 is added to the information shown in FIG. 10D. For example, under a state where an item for selecting the display mode is selected from among the setting items displayed in the second contents displaying area 35, a detailed image 38 that displays a reduced layout of each display mode is displayed.

In addition, as shown in FIG. 11E, the second contents displaying segment 15 includes a function for displaying a positional relationship between the vehicle and an ambient vehicle or an obstacle using a first perspective diagram that models the vehicle as looked down from an upper rear side. The viewpoint position in the second perspective diagram is preferably set to a position higher than the viewpoint position in the first perspective diagram. This enhances the visibility of the second perspective diagram and enhances the visibility of a wider range.

The second horizontal line 39, which is drawn between the ground and the sky in the first perspective diagram, is displayed in the same shape and in the same position as the second boundary line 36 appearing when the other information is displayed. This means that, even if the information displayed on the second contents displaying segment 15 is switched, the second boundary line 36 and the second horizontal line 39 are unchanged. Here, the second boundary line 36 and the second horizontal line 39 do not have to be in the completely same shape.

### 3. Effect

(1) The display device 1 of the present embodiment includes a first displaying mode 4 having the first contents displaying segment 10, the first output displaying segment 11, and the second output displaying segment 12. The first contents displaying segment 10 displays information indicating a driving state of the vehicle or an operation state of an on-board device. The first output displaying segment 11 is arranged in a range including a portion above the first contents displaying segment 10 and indicates the output of the vehicle with the length of a bar graph drawn therein. The second output displaying segment 12 is arranged in a range including at least portions on left and right sides of the first contents displaying segment 10 and the first output displaying segment 11 and a portion above the first contents displaying segment 10 and the first output displaying segment 11 at an outer circumference of the first contents displaying segment 10 and the first output displaying segment 11, and indicating a vehicle speed of the vehicle with a length of a bar graph drawn therein.
   With this configuration, a wide variety of information can be efficiently displayed in an easy-to-understand and compact manner, and the information density can be enhanced without impairing the intelligibility of the information. For example, as illustrated in FIGs. 4A and 4B, the second output displaying segment 12 is arranged on the outermost circumference side of the rectangular displaying area, and the first contents displaying segment 10 and the first output displaying segment 11 may be disposed inside the rectangular displaying area without difficulty. Consequently, it is possible to easily achieve the display device 1 which can display contents that a user can easily see and understand and is highly convenient to the user.
(2) The first output displaying segment 11 may be provided with the first-output left area 20 and the first-output upper area 21. The first-output left area 20 extends in the up-down direction on the left side of the first contents displaying segment 10. The first-output upper area 21 extends rightward from an upper end of the first-output left area 20 above the first contents displaying segment 10. The second output displaying segment 12 may be provided with the second-output left area 22, the second-output upper area 23, and the second-output right area 24.
   The second-output left area 22 extends in up-down direction on the left side of the first-output left area 20. The second-output upper area 23 extends rightward from an upper end of the second-output left area 22 above the first-output upper area 21. The second-output right area 24 extends downward from the right end of the second-output upper area 23 on the right side of the first contents displaying segment 10. With such a configuration, the first-output left area 20 and the second-output left area 22 are aligned along the left-right direction, so that the information density can be enhanced without impairing the intelligibility of the information. In addition, the convenience of the display device 1 can be further improved.
(3) The first displaying mode 4 may be further provided with the first remaining capacity displaying segment 13. The first remaining capacity displaying segment 13 is arranged below and contiguous to the first output displaying segment 11 (the first-output left area 20) and displays information indicating a remaining capacity of the battery mounted on the vehicle. In this way, by arranging the first remaining capacity displaying segment 13 below and contiguous to the first output displaying segment 11 (first-output left area 20), the information density can be enhanced without impairing the intelligibility of the information. In addition, the convenience of display device 1 can be further improved.
(4) In a HEV equipped with a motor that carries out power running and regeneration, a power area indicating a consumption electric power of the motor and a charging area indicating charged energy of the driving battery may be provided to the first output displaying segment 11. In this case, as shown in FIG. 6B, the charging area may be arranged at least in the first-output left area 20 and the first remaining capacity displaying segment 13 may be arranged below and contiguous to the charging area.
   With such a configuration, the relationship between the state of performing the power regeneration in the motor and a remaining capacity of a driving battery charged as a result of the regeneration can be understood at a glance, so that information can be presented in an easy-to-understand manner. In addition, in the display example of FIG. 6B, the extending direction of the output at the time of regeneration (the direction in which the negative output value increases) displayed in first output displaying segment 11 is in a direction opposite to the extending direction of the bar graph displayed in first remaining capacity displaying segment 13. This makes it possible to intuitively understand that the regenerative power is charged in the driving battery with ease. In addition, the convenience of the display device 1 can be further improved.
(5) The first displaying mode 4 may be further provided with a first numerical vehicle speed displaying segment 14 indicating the vehicle speed of the vehicle by number separately from the second output displaying segment 12. Displaying the vehicle speed by number in addition to with the bar graph can enhance the efficiency in information transferring. In addition, the convenience of the display device 1 can be further improved. Not requiring to visually measure the length of the bar graph with reference to a scale and a pointer as performed in bargraph displaying, numerical-value displaying is useful when the user wants to instantaneously grasp the vehicle speed.
(6) The first numerical vehicle speed displaying segment 14 may be provided with an area for additionally displaying information other than the numerical value displaying area 25, which area is exemplified by the cruise control displaying area 26, the legal displaying area 27, and the converted value displaying area 28. The cruise control displaying area 26 is an area displaying information of cruise control that automatically increases and decreases the vehicle speed irrespective of driving operation. The legal displaying area 27 is an area displaying information of the vehicle speed conforming to law and regulation, and the converted value displaying area 28 is an area displaying a value obtained by converting the vehicle speed of the vehicle into another unit.
   Providing the above areas can present information in an easy-to-understand manner in a limited space, so that the information density can be enhanced. In addition, the convenience of the display device 1 can be further improved. The legal displaying area 27 and the converted value displaying area 28 may be added only when the destination of the vehicle requires such a displaying function. In a vehicle without the cruise control function, the cruise control displaying area 26 is not required. The unit for speed commonly used in the destination is not always the same as the unit that the user can easily grasp. Therefore, from the viewpoint of usability, the first numerical vehicle speed displaying segment 14 may be provided with the converted value displaying area 28 as standard equipment.
(7) The first contents displaying segment 10 may be provided with the first title displaying area 30 that displays the title of information, the first contents displaying area 31 that displays the content of the information, and the first boundary line 32 horizontally extending to partition the first title displaying area 30 and the first contents displaying area 31 in an up-down direction. This configuration makes the user possible to rapidly grasp the meaning and the title of the information displayed in the first contents displaying area 31 simply by browsing the first title displaying area 30. Accordingly, the information density can be enhanced without impairing the intelligibility of the information. Further, by drawing the first boundary line 32 between the first title displaying area 30 and the first contents displaying area 31, it is possible to clearly separate and present the respective pieces of information within a limited space. In addition, the convenience of display device 1 can be further improved.
(8) As illustrated in FIG. 10E, the first contents displaying segment 10 may have a function for displaying a positional relationship between the vehicle and an ambient vehicle or an obstacle using the first perspective diagram that models the vehicle as looked down from an upper rear side. In this case, the first horizontal line 33, which is drawn between the ground and the sky in the first perspective diagram, is preferably displayed in the same position as the first boundary line 32. As described above, by matching the first horizontal line 33 with the first boundary line 32 in the first perspective diagram on the screen, even if the displayed contents of the first contents displaying segment 10 is switched, it is possible to give a sense of unity to the displayed content, so that a wide variety of information can be presented to the user in an easy-to-understand manner without giving a sense of discomfort to the user. In addition, the convenience of the display device 1 can be further improved.
(9) The above display device 1 may include the second displaying mode 5 formed of the second contents displaying segment 15, the third output displaying segment 16, and the second numerical vehicle speed displaying segment 17. The second contents displaying segment 15 has a wider area than the first contents displaying segment 10, and is a segment that displays information representing the running state of the vehicle and the operating state of the on-board devices. The third output displaying segment 16 is arranged below the second contents displaying segment 15 and is a segment that displays the output of the vehicle with the length of a bar graph drawn therein. The second numerical vehicle speed displaying segment 17 is arranged above the second contents displaying segment 15 and indicates the vehicle speed of the vehicle by number. The first displaying mode 4 and the second displaying mode 5 are preferably switchable to each other.
   This configuration can display information representing the running state of the vehicle and the operating state of the on-board devices in a wider area than that in the first displaying mode 4. For example, as shown in FIGs. 5A and 5B, many pieces of information can be displayed in the wide second contents displaying segment 15, or information can be displayed with enlarged images or letters. Consequently, it is possible to easily achieve the display device 1 which can display contents that a user can easily see and understand and is highly convenient to the user.
(10) The second displaying mode 5 may be provided with the second remaining capacity displaying segment 18. The second remaining capacity displaying segment 18 is arranged contiguous to the left side of the third output displaying segment 16, and displays information indicating the remaining capacity of the battery mounted on the vehicle. In this way, by arranging the third remaining capacity displaying segment 18 contiguous to the left side of the third output displaying segment 16, the information density can be enhanced without impairing the intelligibility of the information. In addition, the convenience of display device 1 can be further improved.
(11) Like the above the first numerical vehicle speed displaying segment 14, the second numerical vehicle speed displaying segment 17 may be provided with the cruise control displaying area 26, the legal displaying area 27, and the converted value displaying area 28, for example. Providing the above areas can present information in an easy-to-understand manner in a limited space, so that the information density can be enhanced. Further, by matching the contents displayed on the first numerical vehicle speed displaying segment 14 with the contents displayed on the second numerical vehicle speed displaying segment 17, the display contents can be maintained before and after the switching between the first displaying mode 4 and the second displaying mode 5, and the convenience can be improved.
(12) The second contents displaying segment 15 may be provided with the second title displaying area 34 that displays the title of information, the second contents displaying area 35 that displays the content of the information, and the second boundary line 36 horizontally extending to partition the second title displaying area 34 and the second contents displaying area 35 in an up-down direction. In this case, the second boundary line 36 is preferably disposed at a higher position than the first boundary line 32.
   This configuration makes the user possible to rapidly grasp the meaning and the title of the information displayed in the second contents displaying area 35 simply by browsing the second title displaying area 34. Accordingly, the information density can be enhanced without impairing the intelligibility of the information. Further, by drawing the second boundary line 36 between the second title displaying area 34 and the second contents displaying area 35, it is possible to clearly separate and present the respective pieces of information within a limited space. Further, by arranging the second boundary line 36 at a higher position than the first boundary line 32, the display area of the second contents displaying area 35 can be widened, so that the browsability of the information can be easily enhanced and the amount of information can be easily increased. In addition, the convenience of the display device 1 can be further improved.
(13) As illustrated in FIG. 11E, the second contents displaying area 15 may have a function for displaying a positional relationship between the vehicle and an ambient vehicle or an obstacle using the second perspective diagram that models the vehicle as looked down from an upper rear side. In this case, the second horizontal line 39, which is drawn between the ground and the sky in the second perspective diagram, is preferably displayed in the same position as the second boundary line 36. As described above, by matching the second horizontal line 39 with the second boundary line 36 in the first perspective diagram on the screen, even if the displayed contents of the second contents displaying segment 15 is switched, it is possible to give a sense of unity to the displayed content, so that a wide variety of information can be presented to the user in an easy-to-understand manner without giving a sense of discomfort to the user. In addition, the convenience of the display device 1 can be further improved.
(14) As shown in FIGs. 10B and 11B, the second contents displaying segment 15 may display information substantially the same as the information displayed in the first contents displaying segment 10. Further, as shown in FIGs. 10C and 11C, the second contents displaying segment 15 may display the detailed image 37 that details the information displayed in the first contents displaying segment 10. Altematively, as shown in FIGs. 10D and11D, the second contents displaying segment 15 may display the detailed image 38 that details the information displayed in the first contents displaying segment 10 for supplementary explanation. By additionally displaying the detailed images 37 and 38, it is possible to present the information in an easy-to-understand manner, so that the convenience can be improved.

### 4. Miscellaneous

The foregoing embodiment is illustrative only and is not intended to preclude the application of various modifications and techniques not explicitly set forth in the present examples. Each configuration of the present embodiment can be variously modified and implemented without departing from the scope thereof. In addition, the configurations of the present embodiment can be selected and omitted as needed, or can be combined appropriately. For example, the display device 1 includes the first displaying mode 4 and the second displaying mode 5, but the second displaying mode 5 can be omitted. Further, the items displayed in the first displaying mode 4 and the second displaying mode 5 can be appropriately changed.

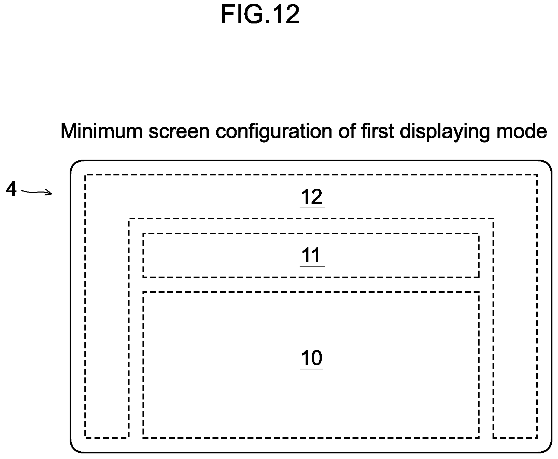

FIG. 12 is a diagram illustrating a minimum configuration of the screen of the first displaying mode 4. The first displaying mode 4 may have at least the first contents displaying segment 10, the first output displaying segment 11, and the second output displaying segment 12. In addition, the first output displaying segment 11 may be arranged in a range including a portion above the first contents displaying segment 10. Further, the second output displaying segment 12 is arranged in a range including at least portions on left and right sides of the first contents displaying segment 10 and the first output displaying segment 11 and a portion above the first contents displaying segment 10 and the first output displaying segment 11 at an outer circumference of the first contents displaying segment 10 and the first output displaying segment 11. With this configuration, a wide variety of information can be efficiently displayed in an easy-to-understand and compact manner, and the information density can be enhanced without impairing the intelligibility of the information. In addition, the convenience of the display device 1 can be improved.

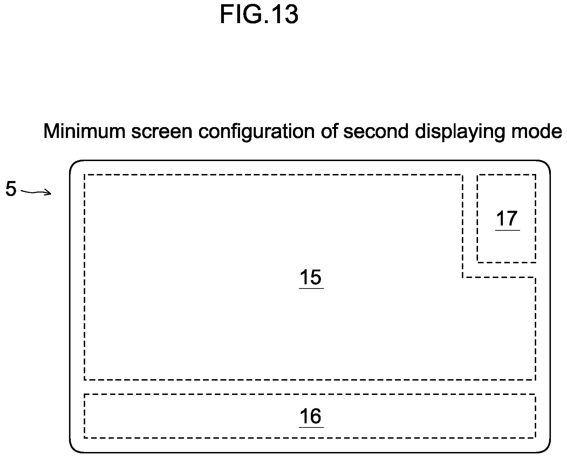

FIG. 13 is a diagram illustrating a minimum configuration of the screen of the second displaying mode 5 if the second displaying mode 5 is provided. It is sufficient that the second displaying mode 5 includes at least the second contents displaying segment 15, the third output displaying segment 16, and the second numerical vehicle speed displaying segment 17. Furthermore, it is sufficient that the third output displaying segment 16 is arranged below the second contents displaying segment 15, and the second numerical vehicle speed displaying segment 17 may be arranged above the second contents displaying segment 15. With this configuration, a wide variety of information can be efficiently displayed in an easy-to-understand and compact manner, and the information density can be enhanced without impairing the intelligibility of the information. In addition, the convenience of the display device 1 can be further improved.

The specific parameters of the first output and the third output displayed on the first output displaying segment 11 and the third output displaying segment 16 and the second output displayed on the second output displaying segment 12 can be arbitrarily set. The specific combination of the output information to be displayed on the first output displaying segment 11, the second output displaying segment 12, and the third output displaying segment 16 are variously conceivable.

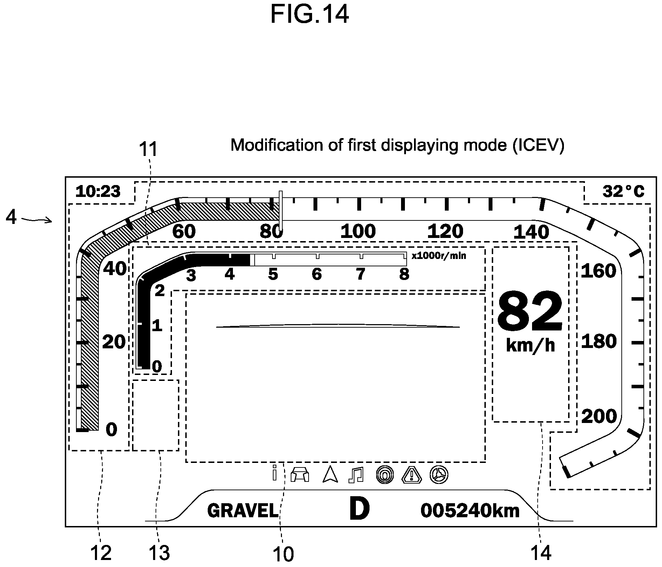

FIG. 14 is a diagram illustrating a modification of the first displaying mode 4 (for an ICEV). The specific content and the specific shape of the bar graph to be displayed in the second output displaying segment 12 and may be appropriately modified. For example, as shown in FIG. 14, the upper limit of the displayed vehicle speed may be set to 200 km/h or higher (about 230 km/h in FIG. 14), or the length of the bar graph may be extended with an increase in upper limit. The shape of the extended part (at the lower right portion) of the bar graph shown in FIG. 14 corresponds to the shape obtained by inverting the shape at the upper right portion upside down. The same shape may be applied to the lower left portion of the bar graph, and the entire shape may be formed into an octagon.

This configuration of the display screen can secure the length of the display area of the bar graph without impairing the sense of unity in appearance and design property. In addition, as compared with the case where the bar graph is extended vertically downward, the dimension in the up-down direction of the second output displaying segment 12 can be shortened by extending the extending part (lower right part) of the bar graph obliquely in the lower left direction. Therefore, such a configuration of the display screen is useful when another indicator is wished to be arranged under the second output displaying segment 12, and information can be displayed efficiently and compactly.

The above embodiment of a HEV is applicable to a plug-in hybrid vehicle (PHEV) capable of externally being charged or externally power supplying. A plug-in hybrid vehicle is a hybrid vehicle (hybrid electric vehicle, HEV) which is mounted with an engine and a motor both serving as driving source, a generator serving as a power generator, and a battery as a power storage device. In the plug-in hybrid vehicle, the battery can be charged by an external charging facility, or the battery is capable supplying power to electrical devices other than vehiclemounted devices.

The former plug-in hybrid vehicle is provided with a contactless power receiving device or a charging port (inlet) for inserting a charging cable through which electric power from an external charging facility is supplied. The latter plug-in hybrid vehicle is provided with an outlet or a contactless power supplying device for external power supplying. A single plug-in hybrid vehicle can be provided with both the above-described charging port and the outlet.

In addition, the layouts of the first output displaying segment 11 and the second output displaying segment 12 in the display area of the output device 3 may be inverted in the left-right direction. For example, the overall shape of the first output displaying segment 11 shown in FIGs. 4A and 4B can be modeled to a shape (rotated L-shape) obtained by rotating the alphabet "L" clockwise by 90 degrees, but may alternatively be the mirror image thereof. In this alternative, the bar graph drawn in the first output displaying segment 11 may or may not be similarly inverted in the left-right direction. For example, the position of the origin (a scale indicating that the output is zero) of the bar graph representing the height of the output may be set to the lower right portion of the first output displaying segment 11, or may be set to the left end of the first output displaying segment 11. Here, it should be noted that the object to be inverted in the left-right direction is the entire shape of the first output displaying segment 11 and/or the bar graph, and there is no need to invert, in the left-right direction, the numerical value representing the magnitude of the output and the letters.

Further, in the second output displaying segment 12 shown in FIG. 8, the position of the origin (a scale indicating that the vehicle speed is zero) of the bar graph indicating the height of the vehicle speed is arranged near the lower end of the second-output left area 22, but the origin may alternatively be arranged near the lower end of the right area of second output displaying segment 24. That is, the change in vehicle speed may be expressed such that the bar graph expends counterclockwise as the vehicle speed increases. As described above, the specific contents shown in the first output displaying segment 11 and the second output displaying segment 12 and the specific shapes of the bar graphs may be appropriately changed.

### [Industrial Applicability]

The present embodiment can be applied to the manufacturing industry of a display device to be mounted on vehicle and also to a vehicle equipped with the display device.

### [Reference Signs List]

1: display device
2: electronic control device
3: output device
4: first displaying mode
5: second displaying mode
10: first contents displaying segment
11: first output displaying segment
12: second output displaying segment
13: first remaining capacity displaying segment
14: first numerical vehicle speed displaying segment
15: second contents displaying segment
16: third output displaying segment
17: second numerical vehicle speed displaying segment
18: second remaining capacity displaying segment
20: first-output left area
21: first-output upper area
22: second-output left area
23: second-output upper area
24: second-output right area
25: numerical value displaying area
26: cruise control displaying area
27: legal displaying area
28: converted value displaying area
30: first title displaying area
31: first contents displaying area
32: first boundary line
33: first horizontal line
34: second title displaying area
35: second contents displaying area
36: second boundary line
37,38: detailed image
39: second horizontal line

## Claims

1. A display device comprising a first displaying mode,
the first displaying mode comprising:
a first contents displaying segment displaying information indicating a running state of a vehicle or an operation state of an on-board device;
a first output displaying segment arranged in a range including a portion above the first contents displaying segment and indicating a first output of the vehicle with a length of a bar graph drawn therein; and
a second output displaying segment arranged in a range including at least portions on left and right sides of the first contents displaying segment and the first output displaying segment and a portion above the first contents displaying segment and the first output displaying segment at an outer circumference of the first contents displaying segment and the first output displaying segment and indicating a second output of the vehicle with a length of a bar graph drawn therein.

2. The display device according to claim 1, wherein
the first output displaying segment comprises:
a first-output left area extending in a top-bottom direction on a left side of the first contents displaying segment; and
a first-output upper area extending rightward from an upper end of the first-output left area above the first contents displaying segment,
the second output displaying segment comprises:
a second-output left area extending in the top-bottom direction on a left side of the first-output left area;
a second-output upper area extending rightward from an upper end of the second-output left area above the first-output upper area; and
a second-output right area extending downward from a right end of the second-output upper area on a right side of the first contents displaying segment,
the first-output left area indicates a relatively lower value of the first output, and
the second-output left area indicates a relatively lower value of the second output.

3. The display device according to claim 2, wherein
the first displaying mode further comprises a first remaining capacity displaying segment arranged below and contiguous to the first-output left area and displaying information indicating a remaining capacity of a battery mounted on the vehicle.

4. The display device according to claim 3, wherein
the vehicle is a hybrid vehicle comprising a motor that carries out power running and regeneration,
the first output displaying segment comprises a power area indicating a consumption electric power of the motor and a charging area indicating charged energy of the battery,
the charging area is arranged at least in the first-output left area, and
the first remaining capacity displaying segment is arranged below and contiguous to the charging area.

5. The display device according to any one of claims 1-4, wherein
the second output displaying segment indicates a vehicle speed of the vehicle, and
the first displaying mode further comprises a first numerical vehicle speed displaying segment indicating the vehicle speed by number separately from the second output displaying segment.

6. The display device according to claim 5, wherein
the first numerical vehicle speed displaying segment comprises
a cruise control displaying area displaying information of cruise control that automatically increases and decreases the vehicle speed irrespective of driving operation, a legal displaying area displaying information of the vehicle speed conforming to law and regulation, or a converted value displaying area displaying a value obtained by converting the vehicle speed of the vehicle into another unit.

7. The display device according to any one of claims 1-6, wherein
the first contents displaying segment comprises
a first title displaying area displaying a title of the information,
a first contents displaying area displaying a content of the information, and
a first boundary line horizontally extending to partition the first title displaying area and the first contents displaying area in an up-down direction.

8. The display device according to claim 7, wherein
the first contents displaying segment comprises a function for displaying a positional relationship between the vehicle and an ambient vehicle or an obstacle using a first perspective diagram that models the vehicle as looked down from an upper rear side, and
the first contents displaying segment displays a first horizontal line between a ground and a sky in the first perspective diagram at a same position as the first boundary line.

9. The display device according to any one of claims 1-8, further comprising a second displaying mode,
the second displaying mode comprising
a second contents displaying segment having a wider range than the first contents displaying segment and displaying information indicating the driving state or the operation state,
a third output displaying segment arranged below the second contents displaying segment and indicating the first output with a length of a bar graph drawn therein, and
a second numerical vehicle speed displaying segment arranged above the second contents displaying segment and indicates the vehicle speed of the vehicle, serving as the second output, by number, and
the first displaying mode and the second display mode are switchable.

10. The display device according to claim 9, wherein
the second displaying mode further comprises a second remaining capacity displaying segment arranged on the right side of and contiguous to the third output displaying segment and displaying information indicating a remaining capacity of a battery mounted on the vehicle.

11. The display device according to claim 9 or 10 directly or indirectly citing at least claim 6, wherein
the second numerical vehicle speed displaying segment comprises the cruise control displaying area, the legal displaying area, or the converted value displaying area being the same as one displayed in the first numerical vehicle speed displaying segment in the first displaying mode.

12. The display device according to any one of claims 9-11 directly or indirectly citing at least claim 7, wherein
the second contents displaying segment comprises
a second title displaying area displaying a title of the information,
a second contents displaying area displaying a content of the information, and
a second boundary line horizontally extending to partition the second title displaying area and the second contents displaying area in an up-down direction,
the second boundary line is arranged at a higher position than the first boundary line.

13. The display device according to claim 12, wherein
the second contents displaying segment comprises a function for displaying a positional relationship between the vehicle and an ambient vehicle or an obstacle using a first perspective diagram that models the vehicle as looked down from an upper rear side, and
the second contents displaying segment displays a second horizontal line between a ground and a sky in the second perspective diagram at a same position as the second boundary line.

14. The display device according to any one of claims 9-13, wherein
the second contents displaying segment displays information substantially same as the information displayed in the first contents displaying segment or a detailed image diagraming the information in detail.
